# EUROPÄISCHE PATENTSCHRIFT

(11) **EP 0 882 615 B1**
(45) Veröffentlichungstag und Bekanntmachung des Hinweises auf die Patenterteilung: **09.04.2003**
(21) Anmeldenummer: 98106953.7
(22) Anmeldetag: 16.04.1998
(51) Int. Cl.: B60J 7/20

(54) **Kraftfahrzeug, insbesondere Personenkraftwagen**
Motor vehicle, particularly passenger vehicle
Véhicule automobile en particulier véhicule de passagers

(30) Priorität: 06.06.1997 DE 19723818
(43) Veröffentlichungstag der Anmeldung: 09.12.1998
(73) Patentinhaber: Dr.Ing.h.c. F. Porsche Aktiengesellschaft, 70435 Stuttgart (DE)
(72) Erfinder: Armbruster, Reiner, 72275 Alpirsbach (DE); Dreissig, Bernd, 75223 Öschelbronn (DE)

(56) Entgegenhaltungen:
- EP-A- 0 353 203
- DE-A- 3 939 145
- DE-C- 3 801 148
- DE-C- 3 903 679
- DE-C- 19 538 738

## Beschreibung

Die Erfindung bezieht sich auf ein Kraftfahrzeug, insbesondere Personenkraftwagen mit einem Verdeck, das in der Ablagestellung in einem heckseitigen Aufnahmeraum untergebracht ist, der durch einen Verdeckkastendeckel zumindest abschnittsweise nach oben hin abgedeckt ist, wobei bei zurückgeklapptem Verdeck ein vorderer Verdeckabschnitt mit seinem vorderen Rand an eine vorgelagerte querverlaufende Abdeckung und seitlich außenliegende Abdeckklappen für den Durchtritt des Verdeckgestänges herangeführt ist.

Bei einer bekannten Anordnung der eingangs genannten Gattung (DE 195 38 738 C1) erstreckt sich bei zurückgeklapptem Verdeck an beiden Längsseiten des Personenkraftwagens zwischen der Außenseite des abgelegten vorderen Verdeckabschnitts, der Innenseite der seitlichen Schenkel des Verdeckkastendeckels und dem hinteren querverlaufenden Rand der vorgelagerten Abdeckklappe jeweils ein nach oben hin offener länglicher Spaltbereich, der für die Verstellbewegung des Verdeckgestänges benötigt wird. Durch die Spaltbereiche können kleine Gegenstände in unerwünschter Weise in den Schwenkbereich des Verdeckgestänges gelangen. Zudem wirken die offenen Spaltbereiche optisch störend.

Aufgabe der Erfindung ist es, in den Spaltbereichen zwischen abgelegtem vorderen Verdeckabschnitt, Verdeckkastendeckel und vorgelagerter Abdeckklappe solche Vorkehrungen zu treffen, daß einerseits eine ungestörte Verdeckbetätigung möglich ist und daß andrerseits die Fahrzeugoptik bei zurückgeklapptem Verdeck verbessert wird.

Erfindungsgemäß wird diese Aufgabe durch die Merkmale des Anspruchs 1 gelöst. Weitere, die Erfindung in vorteilhafter Weise ausgestaltende Merkmale beinhalten die Unteransprüche.

Die mit der Erfindung hauptsächlich erzielten Vorteile sind darin zu sehen, daß durch die Anordnung einer schwenkbaren Zusatzklappe an den längsgerichteten seitlichen Schenkeln des Verdeckkastendeckels die Spaltbereiche bei abgelegtem Verdeck und geschlossenem Verdeckkastendeckel verschlossen sind(Sichtschutz), wogegen bei geöffnetem Verdeckkastendeckel die Zusatzklappen selbsttätig in eine aufrechte Freigabestellung verlagert werden. Vorteilhafter Weise wird zur Steuerung der Zusatzklappen jeweils ein Lenkerarm des Viergelenkscharniers des Verdeckkastendeckels herangezogen. Die Zusatzklappen weisen einen einfachen Aufbau auf und sind kostengünstig herstellbar. Sie können am Verdeckkastendeckel vormontiert werden.

Ein Ausführungsbeispiel der Erfindung ist in den Zeichnungen dargestellt und wird im folgenden näher beschrieben.

Es zeigen
- Fig. 1: eine Teildraufsicht auf einen Personenkraftwagen, wobei der jeweilige Spaltbereich zwischen dem abgelegten vorderen Verdeckabschnitt, dem Verdeckkastendeckel und der vorgelagerten Abdeckklappe mit einer Zusatzklappe versehen ist,
- Fig. 2: eine Explosionsdarstellung der Bauteile der Zusatzklappe und zwar von unten gesehen,

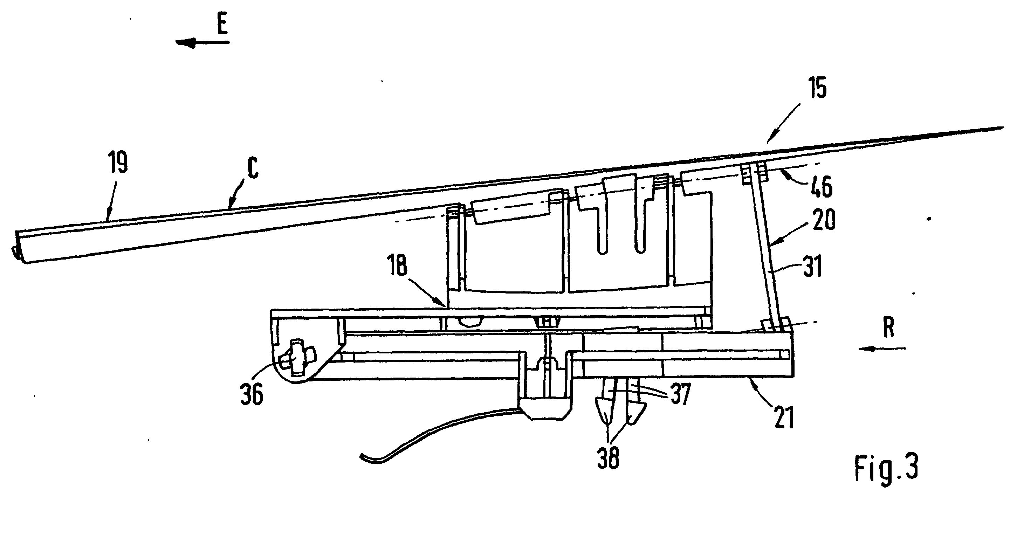

- Fig. 3: eine Seitenansicht auf die Zusatzklappe in ihrer Schließstellung,

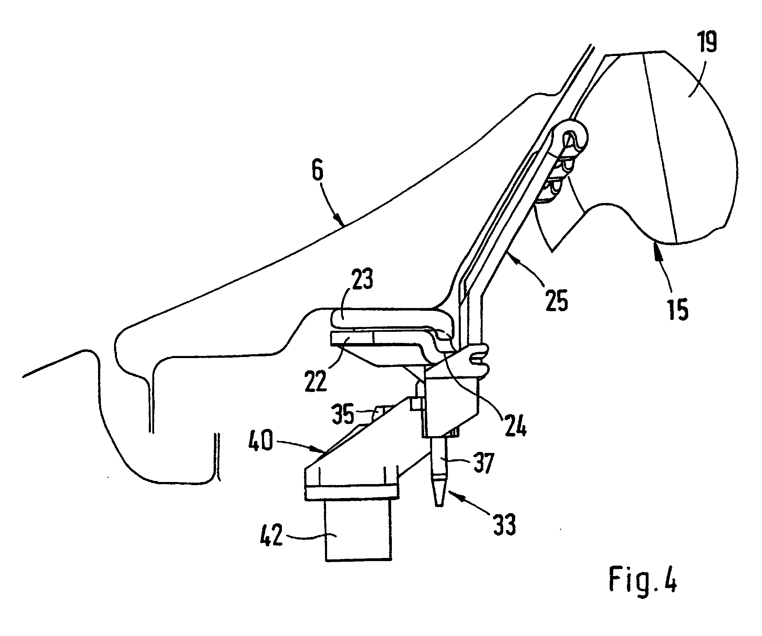

- Fig. 4: eine Ansicht in Pfeilrichtung R der Fig. 3 auf den Verdeckkastendeckel und die daran befestigte Zusatzklappe,

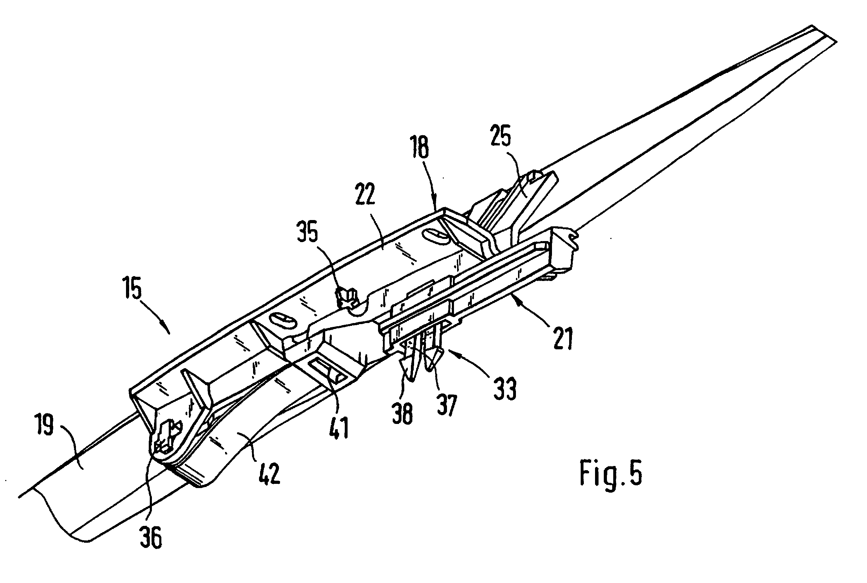

- Fig. 5: eine perspektivische Ansicht von schräg unten auf die Zusatzklappe,

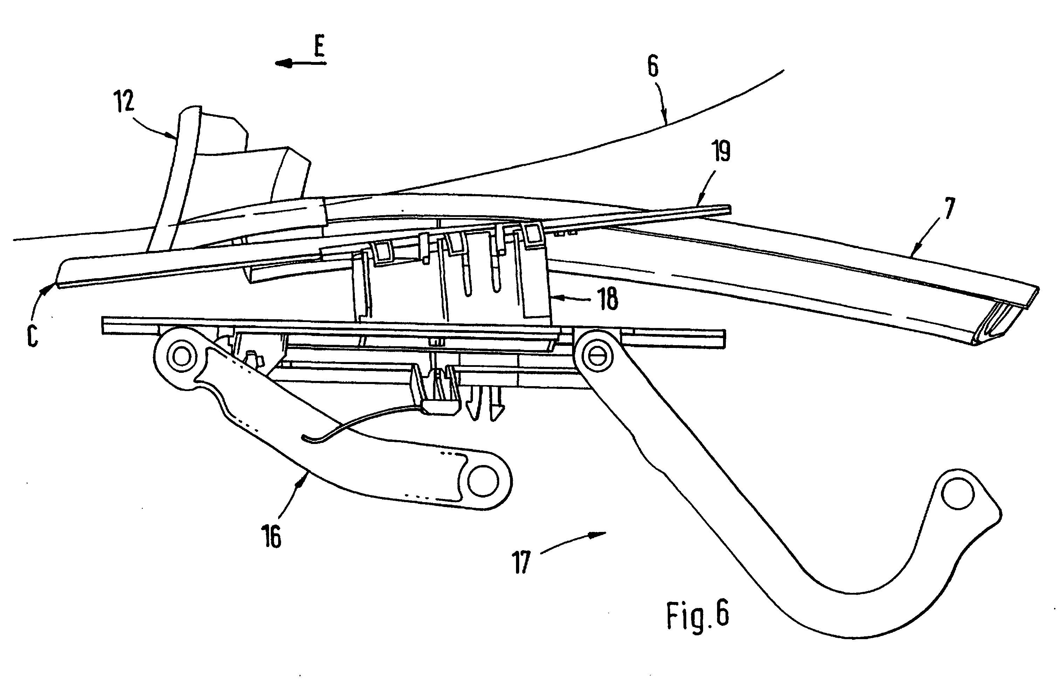

- Fig. 6: eine Teilseitenansicht mit dem geschlossenen Verdeckkastendeckel, dem Viergelenkschamier und der Zusatzklappe in Schließstellung,

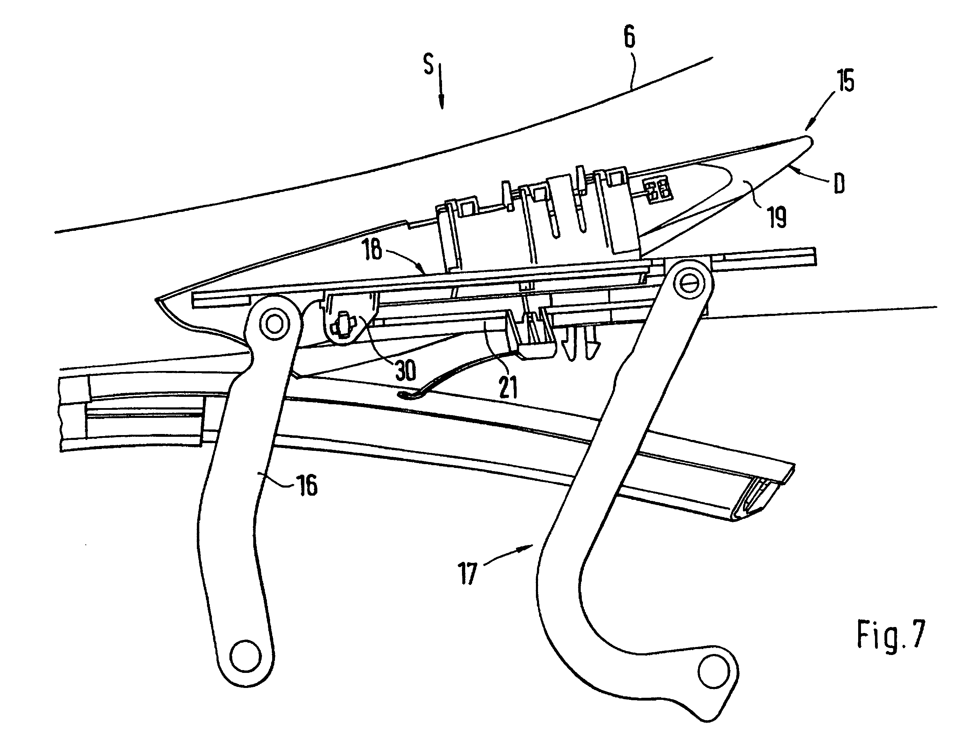

- Fig. 7: eine Teilseitenansicht ähnlich Fig. 6 bei geöffnetem Verdeckkastendeckel,

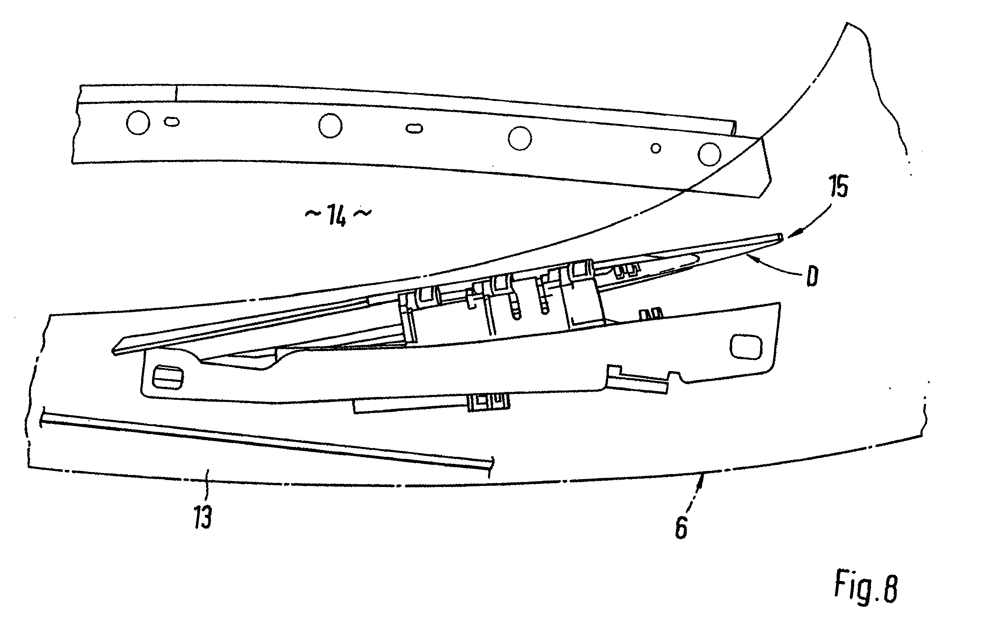

- Fig. 8: eine Teildraufsicht in Pfeilrichtung S der Fig. 7,

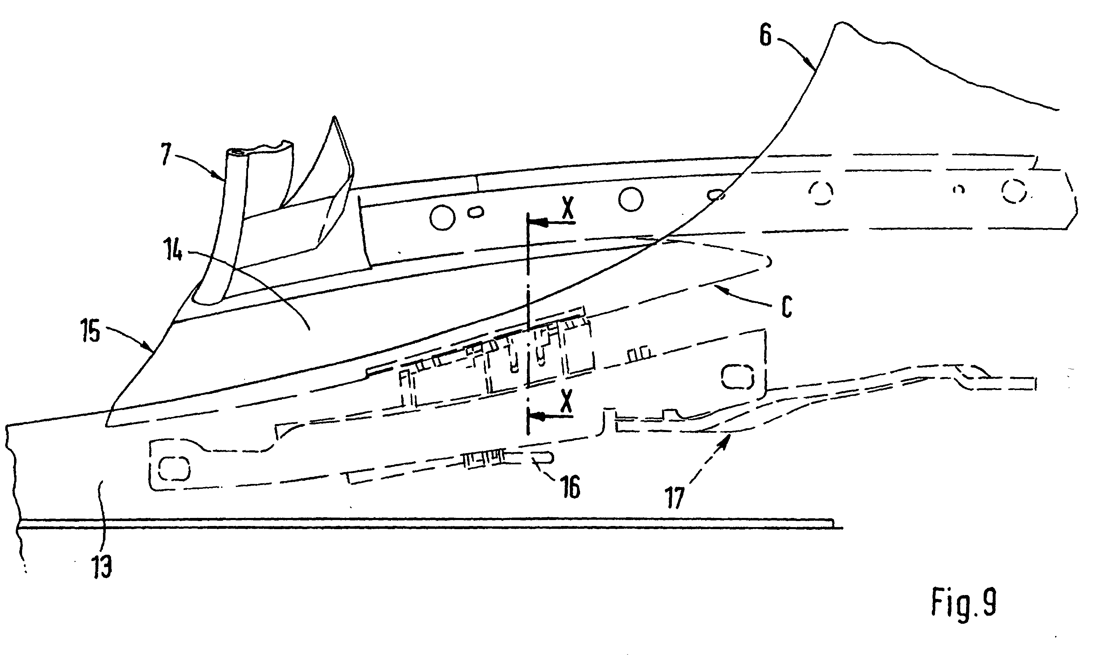

- Fig. 9: eine Teildraufsicht auf die geschlossene Zusatzklappe und die angrenzenden Bauteile und

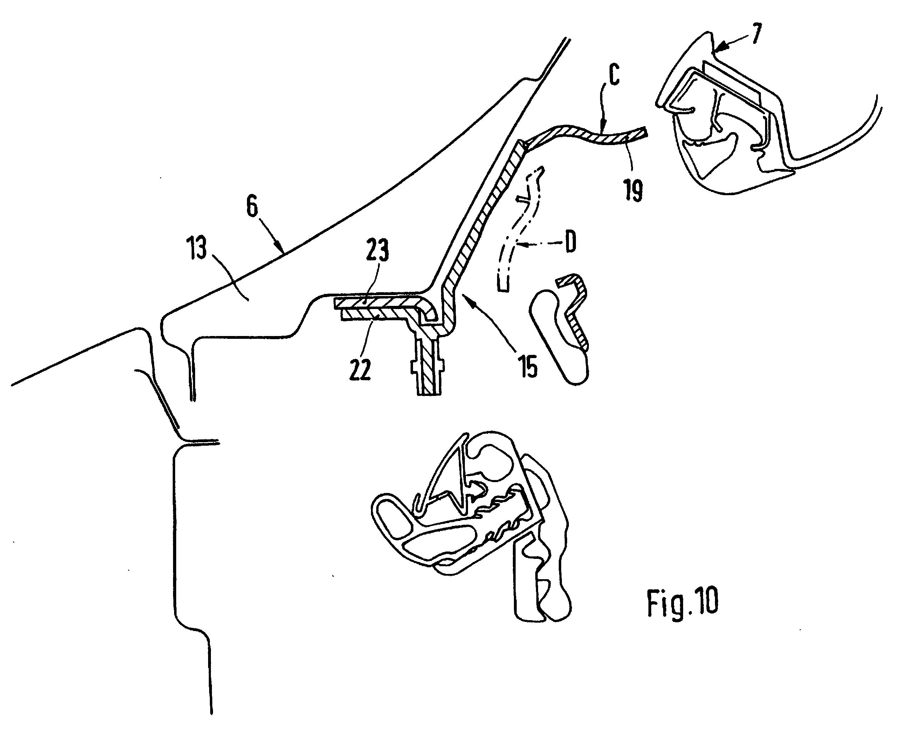

- Fig. 10: einen Schnitt nach der Linie X-X der Fig. 9, um 90° gedreht.

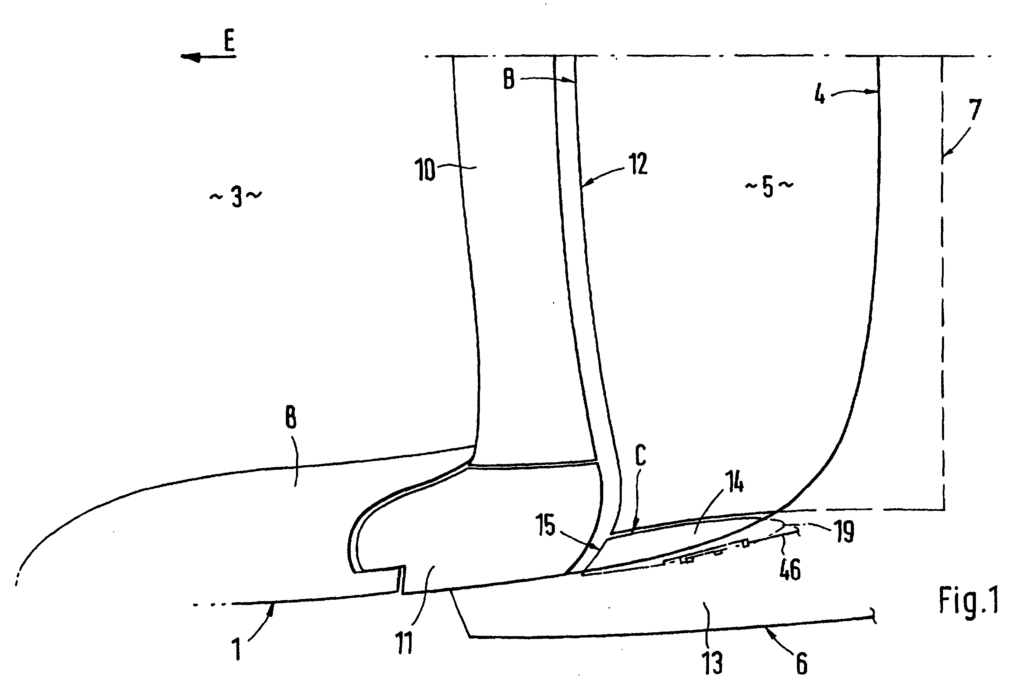

Ein durch ein Cabriolet 1 gebildeter Personenkraftwagen weist oberhalb einer Gürtellinie ein Verdeck auf, das sich in einer nicht näher gezeigten Schließstellung von einem Windschutzscheibenrahmen - einen Fahrgastraum 3 überspannend - bis zu einem Heckbereich 4 erstreckt. In der zurückgeklappten Ablagestellung B ist das Verdeck in einem heckseitigen Aufnahmeraum 5 aufgenommen, der zumindest abschnittsweise nach oben hin durch einen Verdeckkastendeckel 6 abgedeckt ist. Ein großflächiger vorderer Verdeckabschnitt 7 bildet gemäß Fig. 1 in seiner zurückgeklappten Stellung - in Fahrtrichtung E gesehen - eine dem Verdeckkastendeckel 6 vorgelagerte Abdeckung des durch einen Verdeckkasten gebildeten Aufnahmeraums 5.

In Fig. 1 sind der Verdeckkastendeckel 6, der zurückgeklappte formsteife, vordere Verdeckabschnitt 7, eine seitlich außenliegende Fondseitenverkleidung 8, eine querverlaufende Verkleidung 10 und eine seitlich außenliegende, verlagerbare Abdeckklappe 11 dargestellt. Die Abdeckklappe 11 ist zum Durchtritt des nicht näher dargestellten Verdeckgestänges von einer horizontalen Schließstellung in eine aufrechte Freigabestellung bewegbar. Der formsteife Verdeckabschnitt 7 ist in der Ablagestellung B mit seinem vorderen Rand 12 nahe an die angrenzende, querverlaufende Verkleidung 10 und die Abdeckklappe 11 herangeführt.

Erfindungsgemäß ist an den längsgerichteten seitlichen Schenkeln 13 des Verdeckkastendeckels 6 jeweils eine schwenkbare Zusatzklappe 15 vorgesehen, die bei zurückgeklapptem Verdeck 2 und geschlossenem Verdeckkastendeckel 6 den freibleibenden Spaltbereich 14 zwischen der Außenseite des vorderen Verdeckabschnitts 7, der Innenseite des Verdeckkastendeckels 6 und dem hinteren Rand der Abdeckklappe 11 verschließt.

Jede Zusatzklappe 15 ist von einer Schließstellung C in eine aufrechte Stellung D verlagerbar und umgekehrt, wobei die Bewegung der Zusatzklappe 15 in Abhängigkeit der Stellung eines Lenkers 16 eines Viergelenkscharniers 17 des Verdeckkastendeckels 6 erfolgt.

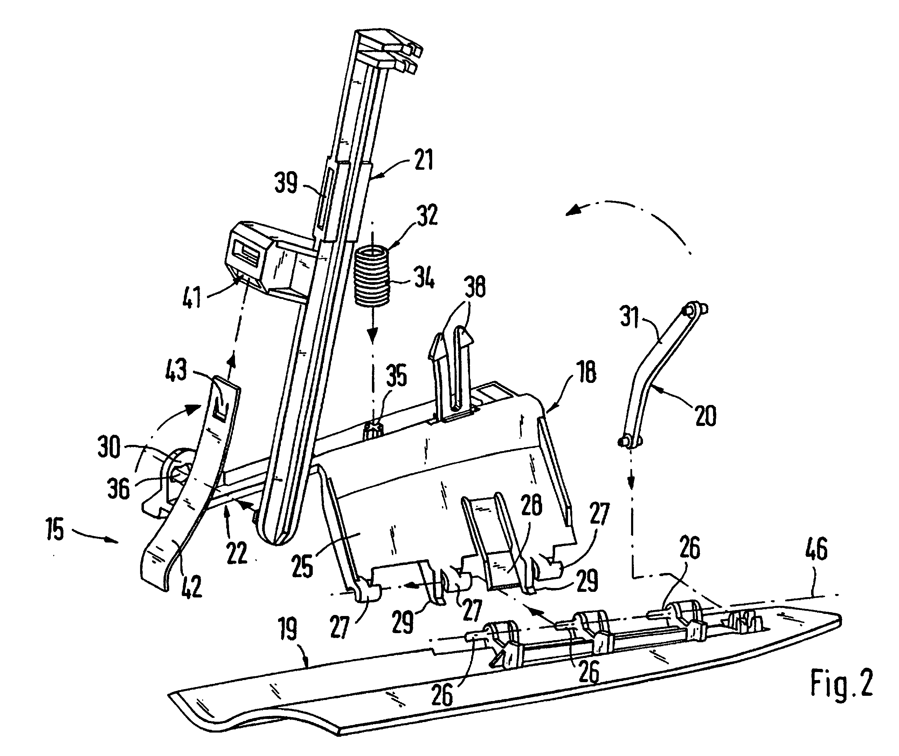

Gemäß Fig. 2 umfaßt jede Zusatzklappe 15 ein Halteteil 18, an dem ein Klappenabschnitt 19 drehbar gelagert ist. Der Klappenabschnitt 19 ist über ein Verbindungsglied 20 an einen schwenkbar am Halteteil 18 gelagerten Antriebshebel 21 angeschlossen, wobei der Antriebshebel 21 mit dem darunterliegenden vorderen Lenker 16 des Viergelenkscharniers 17 in Wirkverbindung steht.

Ein profilierter, etwa horizontal ausgerichteter, langgestreckter Flansch 22 des Halteteils 18 liegt an der Unterseite einer verdeckkastendeckelseitigen Konsole 23 des Viergelenkscharniers 17 an und ist dort in Lage gehalten. Von einer etwa U-förmigen Versteifungssicke 24 des Flansches 22 ist örtlich ein schrägverlaufender, nach oben ragender Wandabschnitt 25 weggeführt, wobei am oberen Rand dieses Wandabschnitts 25 der Klappenabschnitt 19 über Scharniere drehbar gelagert ist (Drehachse 46).

Im Ausführungsbeispiel sind randseitig am Klappenabschnitt 19 mehrere fluchtende Zapfenabschnitte 26 angeformt, die in korrepondierende Aufnahmen 27 des Halteteils 18 eingreifen, wobei die Zapfenabschnitte 26 und die Aufnahmen 27 die Scharniere bilden. Ein freigesparter, federnder Steg 28 des Wandabschnitts 25 läßt sich zum Einsetzen der Zapfenabschnitte 26 seitlich verschwenken. Nach dem Zusammenfügen von Halteteil 18 und Klappenabschnitt 19 federt der Steg 28 zurück und fixiert den Klappenabschnitt 19 in Längsrichtung am Halteteil 18.

Der aufrechte Wandabschnitt 25 ist nur in einem hinteren Teilbereich der Längserstreckung des horizontalen Flansches 22 angeordnet. Der Klappenabschnitt 19 überragt den aufrechten Wandabschnitt 25 sowohl nach vorne als auch nach hinten hin. Am oberen Rand des aufrechten Wandabschnitts 25 sind nach oben hin vorstehende Anschlagzungen 29 für den Klappenabschnitt 19 ausgebildet, durch die die Schwenkbewegung des Klappenabschnitts 19 in die Schließstellung C begrenzt wird. Der Antriebshebel 21 ist an seinem einen Ende an einem nach unten ragenden Lagerabschnitt 30 des Flansches 22 drehbar gelagert, wogegen das andere Ende des Antriebshebels 21 über das Verbindungsglied 20 mit dem Klappenabschnitt 19 verbunden ist. Der Lagerabschnitt 30 ist am vorderen Ende des Flansches 22 des Halteteils 18 ausgebildet. Das Verbindungsglied 20 wird durch eine abgewinkelte Verbindungsstange 31 gebildet, die mit dem Antriebshebel 21 und dem Klappenabschnitt 19 jeweils gelenkig verbunden ist. Hierzu ragen seitlich vorstehende Zapfen der Verbindungsstange 31 in korrespondierende Ausnehmungen des Antriebshebels 21 und des Klappenabschnitts 19 ein. Die aus Kunststoff gefertigte Verbindungsstange läßt sich in gewissem Umfang elastisch verformen.

Der Antriebshebel 21 wird durch ein Federelement 32 nach unten bewegt, wobei der maximale Verstellweg des Antriebshebels 21 durch eine Vorrichtung 33 begrenzt ist. Das Federelement 32 wird im Ausführungsbeispiel durch eine Druckfeder 34 gebildet, die sich zwischen der Unterseite des horizontalen Flansches 22 und dem darunterliegenden Antriebshebel 21 erstreckt. Sowohl am Flansch 22 als auch am Antriebshebel 21 sind sternförmig vorstehende Aufnahmen 35 zur Positionierung der Druckfeder 34 vorgesehen. Die Druckfeder 34 ist etwa in der Mitte zwischen der querverlaufenden Drehachse 36 des Antriebshebels 21 und der Verbindungsstange 31 angeordnet.

Die Vorrichtung 33 wird durch zwei von der Unterseite des horizontalen Flansches 22 nach unten hin weggeführte federnde Rastnasen 38 gebildet, wobei die Rastnasen 38 durch eine Ausnehmung 39 des Antriebshebels 21 hindurchgeführt sind. Beim Passieren des oberen schmäleren Abschnitts der Ausnehmung 39 werden die beiden beabstandeten Rastnasen 38 zusammengedrückt und federn nach dem Hindurchführen wieder auseinander. Die Rastnasen 38 sind am unteren Ende von aufrechten Stegen 37 ausgebildet.

Wenn der Antriebshebel 21 mit seiner Oberseite am darüberliegenden Flansch 22 anliegt, stehen die beiden Rastnasen 38 nach unten hin vor (in Schließstellung der Zusatzklappe). Bei maximal nach unten geschwenkten Antriebshebel 21 hintergreifen die Rastnasen 38 an die Ausnehmung 39 angrenzende Wandabschnitte (Anschlag).

Im Bereich der Druckfeder 34 ist am Antriebshebel 21 eine seitliche Anformung 40 ausgebildet, die weiter nach unten gezogen ist als der stangenförmige Antriebshebel 21. An der Oberseite dieser Anformung 40 ist örtlich die untere sternförmige Aufnahme 35 für die Druckfeder 34 ausgebildet. In einem unteren Randbereich der Anformung 40 ist eine schlitzförmige Aufnahme 41 für eine etwa parallel zur Längserstreckung des Antriebshebels 21 ausgerichtete gebogene Blattfeder 42 vorgesehen, wobei die Blattfeder 42 mit dem vorderen Lenker 16 des Viergelenkscharniers 17 in Wirkverbindung steht. Ein Ende der toleranzausgleichenden Blattfeder 42 ist in die schlitzförmige Aufnahme 41 eingesteckt, wobei eine nach oben abgestellte Zunge 43 der Blattfeder 42 zur formschlüssigen Fixierung derselben in der Aufnahme 41 dient. Anstelle der Blattfeder 42 könnte zwischen dem Lenker 16 und dem Antriebshebel auch eine Schenkelfeder oder dergleichen vorgesehen sein (nicht näher dargestellt).

Die Druckfeder 34 und die Blattfeder 42 sind im Ausführungsbeispiel aus Federstahldraht bzw. Federstahl gefertigt, wogegen das Halteteil 18, der Antriebshebel 21, das Verbindungsglied 20 und der Klappenabschnitt 19 aus Blech oder Kunststoff hergestellt werden können. Der Klappenabschnitt 19 weist - im Querschnitt gesehen - abschnittsweise eine Rinnenkontur 44 auf, die etwa in Verlängerung einer an der vorgelagerten Abdeckklappe 11 angebrachten rinnenförmigen Dichtlippe 45 verläuft.

Bei geöffnetem Verdeckkastendeckel 6 ist die Blattfeder 42 außer Eingriff mit dem Lenker 16 des Viergelenkscharniers 17 und der Antriebshebel 21 wird durch die Wirkung der Druckfeder 34 nach unten gedrückt Über das Verbindungsglied 20 wird der Klappenabschnitt 19 in die aufrechte Stellung verlagert, in der das Verdeckgestänge beim Zurückklappen des Verdecks 2 am Klappenabschnitt 19 vorbeibewegt werden kann.

Beim Schließen des Verdeckkastendeckels 6 drückt der vordere Lenker 16 des Viergelenkscharniers 17 von unten gegen die Blattfeder 42 des Antriebshebels 21, wodurch dieser nach oben entgegen der Federkraft gegen die Unterseite des Halteteils 18 gedrückt wird. Über das Verbindungsglied 20 wird gleichzeitig der Klappenabschnitt 19 in die dann horizontale Schließstellung C verschwenkt.

Der Lenker 16 wird beim Öffnen und Schließen des Verdeckkastendeckels 6 um eine in Fahrzeugquerrichtung verlaufende Drehachse verschwenkt, wobei die Drehachse der Zusatzklappe 15 in Fahrzeuglängsrichtung oder leicht geneigt zur Fahrzeuglängsrichtung verläuft. Die Schwenkbewegungen verlaufen also in versetzten Ebenen. Im Ausführungsbeispiel besteht der Klappenabschnitt 19 aus einem allseitig umspritzten Kunststoffträgerteil, wobei als Außenschicht Santoprene vorgesehen ist.

## Patentansprüche

1. Kraftfahrzeug, insbesondere Personenkraftwagen mit einem Verdeck, das in der Ablagestellung in einem heckseitigen Aufnahmeraum (5) untergebracht ist, der durch einen Verdeckkastendeckel (6) zumindest abschnittsweise nach oben hin abgedeckt ist, wobei bei zurückgeklapptem Verdeck ein vorderer Verdeckabschnitt (7) an eine vorgelagerte, querverlaufende Verkleidung (10) und seitlich außenliegende Abdeckklappen (11) für den Durchtritt des Verdeckgestänges herangeführt ist und sich zwischen der Außenseite des vorderen Verdeckabschnitts, der Innenseite der seitlichen Schenkel (13) des Verdeckkastendeckels (6) und dem hinteren Rand der Abdeckklappe (11) jeweils ein Spaltbereich (14) erstreckt, **dadurch gekennzeichnet, daß** jedem Spaltbereich (14) eine an längsgerichteten seitlichen Schenkel (13) des Verdeckkastendeckels (6) befestigte schwenkbare Zusatzklappe (15) zugeordnet ist, die in Abhängigkeit von der Stellung des Verdeckkastendeckels (6) angesteuert wird.

2. Kraftfahrzeug nach Anspruch 1, **dadurch gekennzeichnet, daß** jede Zusatzklappe (15) mit einem Lenker (16) eines Viergelenkscharniers (17) des Verdeckkastendeckels (6) in Wirkverbindung steht.

3. Kraftfahrzeug nach den Ansprüchen 1 und 2, **dadurch gekennzeichnet, daß** jede Zusatzklappe (15) an einer verdeckkastendeckelseitigen Konsole (23) des Viergelenkscharniers (17) befestigt ist, wobei die Zusatzklappe (15) bei geschlossenem Verdeckkastendeckel (6) eine Schließstellung (C) und bei geöffnetem Verdeckkastendeckel (6) eine aufrechte Stellung (D) einnimmt.

4. Kraftfahrzeug nach einem oder mehreren der vorangegangenen Ansprüche, **dadurch gekennzeichnet, daß** jede Zusatzklappe (15) ein Halteteil (18) umfaßt, an dem ein Klappenabschnitt (19) drehbar gelagert ist, wobei der Klappenabschnitt (19) über ein Verbindungsglied (20) mit einem am Halteteil (18) schwenkbar gelagertem Antriebshebel (21) zusammenwirkt und daß der Antriebshebel (21) mit dem darunterliegenden Lenker (16) des Viergelenkscharniers (17) über ein Federelement in Wirkverbindung steht.

5. Kraftfahrzeug nach einem oder mehreren der vorangegangenen Ansprüche, **dadurch gekennzeichnet, daß** ein profilierter, etwa horizontal ausgerichteter Flansch (22) des Halteteils (18) an der Unterseite der Konsole (23) anliegt und dort in Lage gehalten ist.

6. Kraftfahrzeug nach einem oder mehreren der vorangegangenen Ansprüche, **dadurch gekennzeichnet, daß** am oberen Rand eines vom horizontalen Flansch (22) weggeführten aufrechten Wandabschnitts (25) der außenliegende Rand des Klappenabschnitts (19) drehbar gelagert ist, wobei Zapfenabschnitte (26) des Klappenabschnitts (19) in korrespondierende Aufnahmen (27) des Halteteils (18) eingreifen.

7. Kraftfahrzeug nach einem oder mehreren der vorangegangenen Ansprüche, **dadurch gekennzeichnet, daß** der Antriebshebel (21) am - in Fahrtrichtung gesehen - vorne liegenden Ende des Halteteils (18) drehbar gelagert ist und daß das hintere Ende des Antriebshebels (21) über eine abgewinkelte Verbindungsstange (31) mit dem Klappenabschnitt (19) verbunden ist, wobei beide Enden der Verbindungsstange (31) gelenkig mit dem Antriebshebel (21) bzw. dem Klappenabschnitt (19) zusammenwirken.

8. Kraftfahrzeug nach einem oder mehreren der vorangegangenen Ansprüche, **dadurch gekennzeichnet, daß** zwischen der Unterseite des horizontalen Flansches (22) des Halteteils (18) und dem darunterliegenden Antriebshebel (21) eine Druckfeder (34) angeordnet ist, die den Antriebshebel (21) nach unten hin beaufschlagt.

9. Kraftfahrzeug nach einem oder mehreren der vorangegangenen Ansprüche, **dadurch gekennzeichnet, daß** eine Vorrichtung (33) zur Begrenzung des Schwenkweges des Antriebshebels (21) durch zwei von der Unterseite des horizontalen Flansches (22) des Halteteils (18) weggeführte Rastnasen (38) gebildet wird, wobei die Rastnasen (38) durch eine Ausnehmung (39) des Antriebshebels (21) hindurchgeführt sind und dabei die Ausnehmung (39) hintergreifen.

10. Kraftfahrzeug nach einem oder mehreren der vorangegangenen Ansprüche, **dadurch gekennzeichnet, daß** der Antriebshebel (21) im Bereich der Druckfeder (34) eine seitliche Anformung (40) aufweist, an der eine Aufnahme (35) für die Druckfeder (34) und eine schlitzförmige Aufnahme (41) für eine etwa parallel zur Längserstreckung des Antriebshebels (21) ausgerichtete Blattfeder (42) vorgesehen sind, wobei die Blattfeder (42) mit dem vorderen Lenkerarm (16) des Viergelenkscharniers (17) in Wirkverbindung steht.

11. Kraftfahrzeug nach einem oder mehreren der vorangegangenen Ansprüche, **dadurch gekennzeichnet, daß** das Halteteil (18), der Klappenabschnitt (19), der Antriebshebel (21) und die Verbindungsstange (20) durch Kunststoffspritzteile gebildet werden.

12. Kraftfahrzeug nach einem oder mehreren der vorangegangenen Ansprüche, **dadurch gekennzeichnet, daß** der Klappenabschnitt (19) - im Querschnitt gesehen - abschnittsweise eine langgestreckte Rinnenkontur (44) aufweist, die in Verlängerung einer an der vorgelagerten Abdeckklappe (11) angebrachte rinnenförmige Dichtlippe (45) verläuft.

## Claims

1. A motor vehicle, in particular a passenger car with a folding top, which in the foldeddown position is housed in a receiving space (5) at the rear which is covered at least in part at the top by a lid (6) of the folding-top compartment, wherein when the top is folded back a front portion (7) of the top is brought up to a transversely extending covering (10) positioned in front and cover flaps (11) situated laterally on the outside for the passage of the folding-top linkage and a respective gap region (14) extends in each case between the outside of the front portion of the top, the inside of the lateral arms (13) of the lid (6) of the folding-top compartment and the rear edge of the cover flap (11), **characterized in that** a pivotable additional flap (15), which is secured to a longitudinally orientated lateral arm (13) of the lid (6) of the folding-top compartment and which is actuated as a function of the position of the lid (6) of the folding-top compartment, is associated with each gap region (14).

2. A motor vehicle according to Claim 1, **characterized in that** each additional flap (15) is operatively connected to a control arm (16) of a four-bar hinge (17) of the lid (6) of the folding-top compartment.

3. A motor vehicle according to Claims 1 and 2, **characterized in that** each additional flap (15) is secured to a bracket (23) of the four-bar hinge (17) towards the lid of the folding-top compartment, wherein the additional flap (15) occupies a closed position (C) when the lid (6) of the folding-top compartment is closed and an upright position (D) when the lid (6) of the folding-top compartment is opened.

4. A motor vehicle according to one or more of the preceding Claims, **characterized in that** each additional flap (15) comprises a holding part (18) on which a flap portion (19) is mounted in a rotatable manner, wherein the flap portion (19) co-operates by way of a connecting member (20) with a drive lever (21) mounted on the holding part (18) in a rotatable manner, and the drive lever (21) is operative connected by way of a spring member to the control arm (16) of the four-bar hinge (17) situated thereunder.

5. A motor vehicle according to one or more of the preceding Claims, **characterized in that** a profiled flange (22) of the holding part (18) orientated substantially horizontally rests against the underside of the bracket (23) and is held in position there.

6. A motor vehicle according to one or more of the preceding Claims, **characterized in that** the outside edge of the flap portion (19) is mounted in a rotatable manner on the upper edge of an upright wall portion (25) extending away from the horizontal flange (22), wherein pin portions (26) of the flap portion (19) engage in corresponding receiving means (27) of the holding part (18).

7. A motor vehicle according to one or more of the preceding Claims, **characterized in that** the drive lever (21) is mounted in a rotatable manner on the end of the holding part (18) situated at the front as viewed in the direction of travel, and the rear end of the drive lever (21) is connected to the flap portion (19) by way of an angled connecting rod (31), wherein the two ends of the connecting rod (31) co-operate with the drive lever (21) and the flap portion (19) respectively in an articulated manner.

8. A motor vehicle according to one or more of the preceding Claims, **characterized in that** a compression spring (34), which acts downwards upon the drive lever (21), is arranged between the underside of the horizontal flange (22) of the holding part (18) and the drive lever (21) situated thereunder.

9. A motor vehicle according to one or more of the preceding Claims, **characterized in that** a device (33) for limiting the pivoting path of the drive lever (21) is formed by two catch projections (38) extending away from the underside of the horizontal flange (22) of the holding part (18), wherein the catch projections (38) pass through a recess (39) in the drive lever (21) and engage behind the recess (39).

10. A motor vehicle according to one or more of the preceding Claims, **characterized in that** in the region of the compression spring (34) the drive lever (21) has a lateral moulded-on portion (40) on which are provided a receiving means (35) for the compression spring (34) and a slot-shaped receiving means (41) for a leaf spring (42) orientated substantially parallel to the longitudinal extension of the drive lever (21), wherein the leaf spring (42) is operatively connected to the front control arm (16) of the four-bar hinge (17).

11. A motor vehicle according to one or more of the preceding Claims, **characterized in that** the holding part (18), the flap portion (19), the drive lever (21) and the connecting rod (20) are formed by injection-moulded parts of plastics material.

12. A motor vehicle according to one or more of the preceding Claims, **characterized in that** as viewed in cross-section the flap portion (19) is provided in part with an elongate channel contour (44) which extends as a continuation of a channel-shaped sealing lip (45) attached to the cover flap (11) situated in front.

## Revendications

1. Véhicule automobile, en particulier voiture de tourisme comportant une capote qui est logée, en position de rangement, dans un logement (5) arrière qui est recouvert au moins par tranches, vers le haut, par un couvercle (6) de coffre à capote, une portion avant (7) de la capote s'étendant, lorsque la capote est rabattue vers l'arrière, jusqu'à un habillage (10) placé devant et s'étendant transversalement, et jusqu'à des volets de recouvrement (11) situés latéralement à l'extérieur pour le passage de la tringlerie de la capote, et dans lequel entre le côté extérieur de la portion avant de la capote, le côté intérieur des branches (13) latérales du couvercle (6) du coffre à capote et le bord arrière du volet de recouvrement (11), s'étend une zone de fente (14), **caractérisé en ce qu'**à chaque zone de fente (14) est associé un volet supplémentaire (15) pivotant, fixé sur des branches (13) latérales orientées longitudinalement du couvercle (6) du coffre à capote, lequel volet supplémentaire est commandé en fonction de la position du couvercle (6) du coffre à capote.

2. Véhicule automobile selon la revendication 1, **caractérisé en ce que** chaque volet supplémentaire (15) est en liaison active avec un bras oscillant (16) d'une charnière en parallèlogramme (17) du couvercle (6) du coffre à capote.

3. Véhicule automobile selon les revendications 1 et 2, **caractérisé en ce que** chaque volet supplémentaire (15) est fixé à une console (23) côté couvercle du coffre à capote de la charnière en parallèlogramme (17), le volet supplémentaire (15) prenant une position de fermeture (C) lorsque le couvercle (6) est fermé et une position verticale (D), lorsque le couvercle (6) est ouvert.

4. Véhicule automobile selon une ou plusieurs des revendications précédentes, **caractérisé en ce que** chaque volet supplémentaire (15) comprend un élément de maintien (18) sur lequel est monté tournante une portion de volet (19), la portion de volet (19) coopérant, à travers un organe de liaison (20), avec un levier d'entraînement (21) monté pivotant sur l'élément de maintien (18), et **en ce que** le levier d'entraînement (21) est en liaison active avec le bras oscillant (16) situé au-dessous de la charnière en quadrilatère (17), par l'intermédiaire d'un élément à ressort.

5. Véhicule automobile selon une ou plusieurs des revendications précédentes, **caractérisé en ce qu'**une bride (22) profilée, orientée approximativement horizontalement, de l'élément de maintien (18), s'applique sur la face inférieure de la console (23) et y est maintenue en position.

6. Véhicule automobile selon une ou plusieurs des revendications précédentes, **caractérisé en ce que** sur le bord supérieur d'une portion de paroi (25) verticale, partant de la bride horizontale (22), le bord situé à l'extérieur de la portion de volet (19) est monté tournant, des portions de tenon (26) de la portion de volet (19) s'engageant dans des logements (27) correspondants de l'élément de maintien (18).

7. Véhicule automobile selon une ou plusieurs des revendications précédentes, **caractérisé en ce que** le levier d'entraînement (21) est monté tournant à l'extrémité située à l'avant - vu dans le sens de marche - de l'élément de maintien (18) et **en ce que** l'extrémité arrière du levier d'entraînement (21) est reliée, par une tringle de liaison (31) coudée, à la portion de volet (19), les deux extrémités de la tige de liaison (31) coopérant de manière articulée avec le levier d'entraînement (21) ou la portion de volet (19).

8. Véhicule automobile selon une ou plusieurs des revendications précédentes, **caractérisé en ce qu'**entre la face inférieure de la bride horizontale (22) de l'élément de maintien (18) et le levier d'entraînement (21) situé au-dessous, il est prévu un ressort de compression (34) qui sollicite vers le bas le levier d'entraînement (21).

9. Véhicule automobile selon une ou plusieurs des revendications précédentes, **caractérisé en ce qu'**un dispositif (23) est formé pour limiter la course de pivotement du levier d'entraînement (21), au moyen de deux ergots d'arrêt (38) partant de la face inférieure de la bride horizontale (22) de l'élément de maintien (18), les ergots d'arrêt (38) traversant un évidement (39) du levier d'entraînement (21) et passant ainsi derrière l'évidement (39).

10. Véhicule automobile selon une ou plusieurs des revendications précédentes, **caractérisé en ce que** le levier d'entraînement (21) présente, dans la zone du ressort de compression (34), une partie latérale (40) venue de moulage sur laquelle est prévu un logement (35) pour le ressort de compression (34) et un logement (41) en forme de fente pour un ressort à lame (42) orienté à peu près parallèlement à l'étendue longitudinale du levier d'entraînement (21), le ressort à lame (42) étant en liaison active avec le bras oscillant avant (16) de la charnière en parallèlogramme (17).

11. Véhicule automobile selon une ou plusieurs des revendications précédentes, **caractérisé en ce que** l'élément de maintien (18), la portion de volet (19), le levier d'entraînement (21) et la tige de liaison (20) sont formés par des éléments moulés par injection en matière plastique.

12. Véhicule automobile selon une ou plusieurs des revendications précédentes, **caractérisé en ce que** la portion de volet (19) - vue en coupe transversale - présente par endroits un contour en rigole (44) allongé qui s'étend dans le prolongement d'une lèvre d'étanchéité en forme de rigole placée sur le volet de recouvrement (11) situé devant.
